# EUROPEAN PATENT SPECIFICATION

(11) **EP 2 482 230 B1**
(45) Date of publication and mention of the grant of the patent: **10.07.2019**
(21) Application number: 11158307.6
(22) Date of filing: 15.03.2011
(51) Int. Cl.: G06K 7/14

(54) **Apparatus and method for decoding matrix code symbol**
Vorrichtung und Verfahren zur Dekodierung von Matrixcodesymbolen
Appareil et procédé de décodage de symbole de code de matrice

(30) Priority: 31.01.2011 US 201113018123
(43) Date of publication of application: 01.08.2012
(73) Proprietor: King Abdulaziz City for Science and Technology, Riyadh 11442 (SA)
(72) Inventor: Al-Omari, Hussein Khalid, 11442, Riyadh (SA); Khorsheed, Mohammad Sulaiman, 11442, Riyadh (SA); Al-Mutairy, Yassar A., 11442, Riyadh (SA)
(74) Representative: Goddar, Heinz J.

(56) References cited:
- WO-A1-95/12863
- US-A- 6 024 289
- US-B1- 6 279 828

## Description

### RELATED APPLICATION(S)

This is a continuation-in-part application of commonly owned and US Patent Application Serial No. 12/904,391 filed on October 14, 2010 . The related application mentioned herein is hereby incorporated by reference.

### FIELD OF THE INVENTION

The present invention generally relates to decoding text, and more specifically, to an apparatus and method of decoding text from a matrix code symbol.

### BACKGROUND OF THE INVENTION

Conventional matrix code symbol such as, a data matrix code are well known, and are used for storing text or data. Examples of the data matrix code include a two-dimensional data matrix, and a three-dimensional data matrix. The two-dimensional data matrix barcode includes a grid or a matrix of black and white pixels, representing binary "0" s and "1"s. The text or data is encoded on the two-dimensional data matrix using various encoding techniques. One such encoding technique is the American Standard Code for Information Interchange (ASCII), based on ordering of the English alphabets. ASCII uses a 7-bit encoding scheme and includes definitions for 128 characters. The English ASCII values are between 000 and 255, and it takes one byte to represent an English ASCII value. Theoretically, the two-dimensional data matrix includes a maximum of 1558 English characters that it can hold. If all the characters correspond to digits, the two-dimensional data matrix holds a maximum of 3116 characters.

However, it was not possible to represent other languages and thus ASCII was limited to one script at a time. Thus, Unicode was introduced to represent other languages that were difficult to represent using the 128 character set. Unicode represents characters using 2 bytes and supports multilingual computer processing. As Unicode takes 2 bytes to represent a character, a lot of space is consumed to represent text in the two-dimensional data matrix code. Moreover, the amount of information that the two-dimensional data matrix holds decreases when the plurality of characters include characters from multiple languages, and digits.

Therefore, there is a need for an apparatus and method for decoding text from a matrix code symbol.

US 6 279 828 B1 discloses decoding values from a bar code, wherein said values may correspond to single-byte or multi-byte characters. The leading byte of each character is decoded first. In case that an assigned value of said byte is greater than 128, a trailing byte of the same character is expected.

### BRIEF DESCRIPTION OF THE FIGURES

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.
FIG. 1 illustrates an exemplary environment in which various embodiments of the invention may function.
FIG. 2 illustrates a matrix code symbol.
FIG. 3 illustrates a flow diagram of an apparatus for decoding a matrix code symbol in accordance with an embodiment.
FIG. 4 illustrates a user interface of an apparatus for decoding a matrix code symbol in accordance with an exemplary embodiment.
FIG. 5 illustrates a flowchart of a method of decoding a matrix code symbol in accordance with an embodiment,
FIG. 6 illustrates a flowchart of a computer-implemented method to identify one or more transitioning code values in the one or more encoded values in accordance with an embodiment.
FIG. 7 illustrates a flowchart of a computer-implemented method of obtaining a corresponding predefined encoded value associated with each of the one or more modified encoded values in accordance with an embodiment.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION OF THE INVENTION

Before describing in detail embodiments that are in accordance with the present invention, it should be observed that the embodiments reside primarily in combinations of method steps and apparatus components related to apparatus and method of decoding text from a matrix code symbol. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

Explanation provided in the detailed description section, includes procedures, steps, logic blocks, processing, and other symbolic representations of operations on data bits within a computer memory. A procedure, computer-executed step, logic block, process, etc., is here, and generally, conceived to be a self-consistent sequence of steps or instructions leading to a desired result. The steps described herein require physical manipulations of physical quantities. Usually, though not necessarily, these quantities take the form of electrical or magnetic signals capable of being stored, transferred, combined, compared, and otherwise manipulated in a computer system. Further for ease of description, these signals are referred as bits, values, elements, symbols, characters, terms, numbers, or the like.

It should be noted, however, that all of these and similar terms are to be associated with the appropriate physical quantities and are merely labels applied to these quantities for ease of description. Unless specifically stated otherwise as apparent from the following explanation, it is appreciated that throughout the present invention, explanation utilizing terms such as "modifying,", "truncating", "computing," "selecting," "receiving," "removing," "encoding," "prefixing", "suffixing", "retrieving", "mapping", "decoding" or the like, refer to the actions and processes performed by a computer system, or similar electronic computing device, that manipulates and transforms data represented as physical (electronic) quantities within the computer system's registers and memories into other data similarly represented as physical quantities within the computer system memories or registers or other such information storage, transmission or display devices.

By way of example, and not limitation, computer-usable media may comprise computer storage media and communication media. Computer storage media includes volatile and nonvolatile, removable and non-removable media implemented in any method or technology for storage of information such as computer-readable instructions, data structure, program modules or other data.

The invention relates to an apparatus for decoding a matrix code symbol according to claim 1 and to a method of decoding a matrix code symbol according to claim 7. Preferred embodiments of the invention are described in claims 2-6 and 8-10.

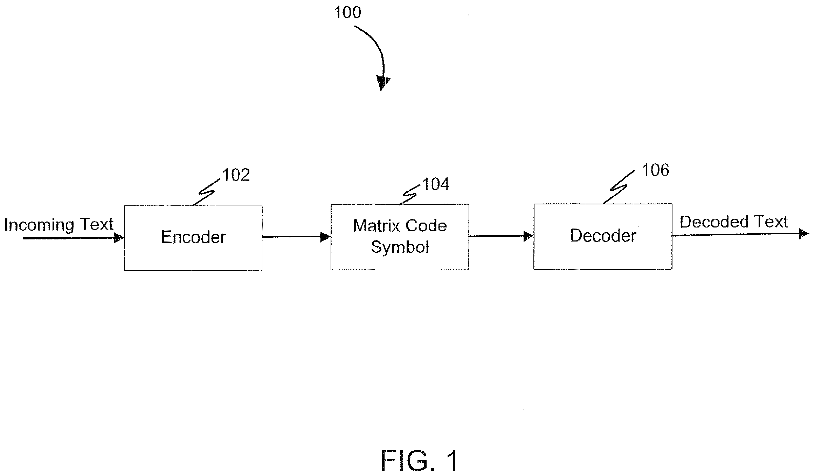

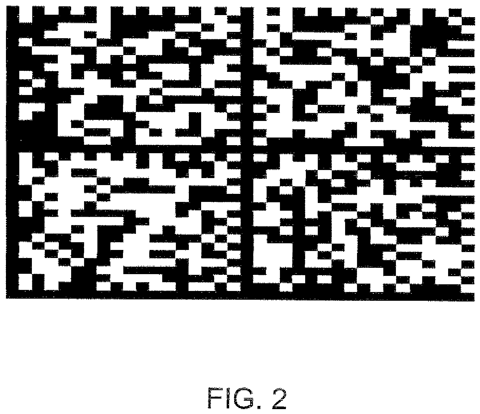

FIG. 1 illustrates an exemplary environment 100 in which various embodiments of the invention may function. Environment 100 includes an encoder 102, a matrix code symbol 104, and a decoder 106. Examples of encoder 102 may include, but is not limited to a device, a circuit, a software program, and an algorithm. Encoder 102 is configured to receive a text and encode the text before storing it on matrix code symbol 104. The text obtained may be a bilingual text or a multilingual text. Alternatively, the text obtained may be associated with a single language for example, Arabic or English. In an embodiment, matrix code symbol 104 may be a data matrix code that includes black and white cells arranged in either a square or a rectangular pattern as shown in FIG. 2. A black cell may represent bit 0 and a white cell may represent bit 1. Alternatively, the black cell may represent bit 1 and the white cell may represent bit 0. An amount of data that matrix code symbol 104 holds depends on dimensions of matrix code symbol 104. Examples of matrix code symbol 104 may include, but is not limited to a two-dimensional data matrix and a three-dimensional data matrix.

In order to encode the text, encoder 102 may use one or more character encoding schemes. Examples of the one or more character encoding schemes include, but are not limited to American Standard Code for Information Interchange (ASCII), Unicode, Morse code, ECC200 ASCII encoding, and Is-8859-1 scheme. Thus, encoder 102 encodes the text and stores it on matrix code symbol 104 using the one or more character encoding schemes. In order to store the encoded text on matrix code symbol 104, the encoded text may be transformed to a format that can be graphically encoded on matrix code symbol 104. For example, the encoded text is transformed to "0"s and "1"s to store it on matrix code symbol 104.

Decoder 106 is configured to retrieve the text by decoding the encoded text stored on matrix code symbol 104. Examples of decoder 106 may include, but is not limited to a device, a circuit, a software program, a scanner, a barcode scanner, a data matrix reader, and an algorithm. Decoder 106 uses a corresponding character decoding scheme associated with the one or more character encoding schemes used by encoder 102 to retrieve the text.

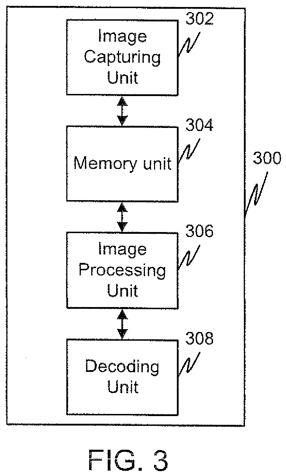

FIG. 3 illustrates a flow diagram of an apparatus 300 for decoding a matrix code symbol in accordance with an embodiment. The apparatus 300 may be a mobile device, a reader, a scanner or any other computing device capable of decoding the matrix code symbol. The matrix code symbol includes a plurality of encoded values. An encoded value of the plurality of encoded values corresponds to a character. The character is associated with a language. In an embodiment, the language may be, but not limited to at least one of Arabic and English. Thus, encoded values of the plurality of encoded values may be associated with characters of different languages. An image corresponding to the matrix code symbol is initially captured by an image capturing unit 302 of apparatus 300. Image capturing unit 302 may be for example, a camera present in a mobile device. In an embodiment, a portion of the image corresponding to the matrix code symbol may be stored in a memory 304 of apparatus 300. Thereafter, an image processor 306 processes the image. The image to be processed is retrieved from memory 304.

In an embodiment, the image of the matrix code symbol may be larger in size or of a higher resolution. The size of the image of the matrix code symbol may be reduced by making some modifications in control options associated with image capturing unit 302. For example, image processor 306 may specify an image size as 400 pixels X 320 pixels instead of 1240 pixels X 1800 pixels and communicate to image capturing unit 302. Thus, image capturing unit 302 captures the image of the matrix code symbol of size 400 pixels X 320 pixels. Thus, by reducing the size of the image or modifying the resolution, computation involved in decoding the matrix code symbol is reduced. Alternatively, the user may specify the image size and accordingly the image of the matrix code symbol is captured,

Alternatively, image processor 306 may reduce the size of the image by reducing the number of pixels per bit. In this case, image processor 306 may communicate a required number of pixels per bit to image capturing unit 302. Thereafter, image capturing unit 302 captures the image with the specified resolution.

In an embodiment, the image of the matrix code symbol may be a buffered image. The buffered image is processed by image processor 306 into a two-dimensional image or a bitmap image. However, image processor 306 may convert the buffered image into any other convenient form using the techniques known in the art in order to facilitate convenient decoding of the matrix code symbol.

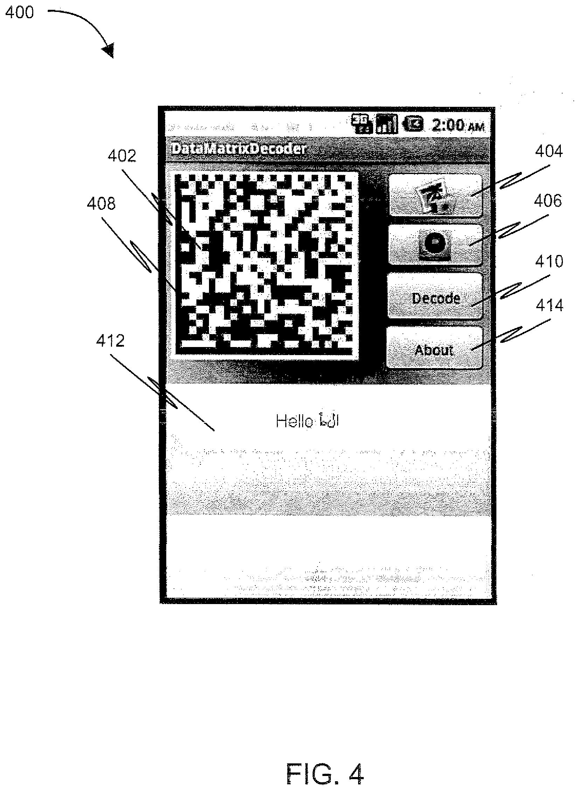

Further, in another instance, the image obtained may be a skewed image. In this case, image processor 306 may process the image to accommodate the error in alignment of the image. This is further explained in conjunction with FIG. 4. Moreover, image processor 306 may process the image to accommodate various errors in the image of the matrix code symbol such as, misalignment, blurriness, shadows, varying sizes of black and white cells in the matrix code symbol, trapezoid issues. Image processor 306 may also use the techniques known in the art to process the image, Once image processor 306 processes the image, the image of the matrix code symbol is ready for decoding.

Decoder 306 then retrieves one or more encoded values from the matrix code symbol. The one or more encoded values may include one or more modified encoded values and one or more predefined encoded values which are identified by decoder 306. A modified encoded value may include two or more digits of a corresponding predefined encoded value. Further, a predefined encoded value is an encoding value obtained from a predefined encoding table. Example of the predefined encoding table may include, but is not limited to an ASCII table, and a Unicode table.

The one or more modified encoded values are identified by detecting one or more transitioning code values present in one or more encoded values of the plurality of encoded values. Thus, the one or more transitioning code values indicate occurrences of the one or more modified encoded values. For example, if a string of encoded values include one or more predefined encoded values and one or more modified encoded values, then one or more transitioning code values are used to indicate occurrences of the one or more modified encoded values in the string. A transitioning code value of the one or more transitioning code values corresponds to an encoded value associated with a transitioning character. Examples of the transitioning character may include, but is not limited to "¦", "*", "^", and "&". In an embodiment, a transitioning code value may correspond to ASCII value "124" associated with a transitioning character "¦". Thus, transitioning code value "124" may be used to identify a language associated with a corresponding character of the one or more encoded values.

Thus, the one or more transitioning code values may indicate a language associated with a character of the one or more encoded values. The language may include for example, but is not limited to English and Arabic. More specifically, a transitioning code value indicates that a language associated with one or more encoded values succeeding the transitioning code value is different from a language associated with one or more encoded values preceding the transitioning code value.

For example, if a transitioning code value is identified after one or more encoded values corresponding to English characters, it may be inferred that an encoded value following the transitioning code value corresponds to a modified encoded value that is associated with an Arabic character. In the same manner, if a transitioning code value is identified after one or more Arabic encoded values, it may be inferred that an encoded value following the transitioning code value corresponds to an English character.

After identifying the one or more modified encoded values, decoder 308 maps each of the one or more modified encoded values to a corresponding predefined encoded value. A modified encoded value may include two or more digits of a corresponding predefined encoded value. In an embodiment, decoder 308 maps each of the one or more modified encoded values to one or more corresponding predefined encoded values using a predefined encoding table. In an embodiment, the predefined encoding table is stored in memory 306. The mapping may be performed by one of but not limited to a look-up operation, and matching of two or more digits present in a modified encoded value with digits of a corresponding predefined encoded value in the predefined encoding table.

For example, digits associated with a modified encoded value "66" of an Arabic character may be used as a query for searching a corresponding predefined encoded value falling within the range of predefined encoded values "1563 to 1618". This range of predefined encoded values is associated with Arabic characters in a Unicode table. A matching encoded value "1566" including the modified encoded value "66" as its last two digits is then retrieved from the Unicode table.

In another embodiment, decoder 308 may add one or more digits to each of the one or more modified encoded values in order to obtain the corresponding predefined encoded value. The one or more digits to be added to each modified encoded value may be predefined. For example, decoder 308 may add two digits to each modified encoded value of modified encoded values to obtain a corresponding predefined encoded value. Considering the modified encoded values associated with Arabic characters, length of the modified encoded values is equal to two digits. In order to obtain the corresponding predefined encoded values, digits "15" are added to the modified encoded values ranging from "63 to 94" and digits "16" are added to the modified encoded values ranging from "00 to 18".

Now consider an example, wherein a matrix code symbol is decoded to retrieve information present in a matrix code symbol. The matrix code symbol includes information associated with a first bilingual text and a second bilingual text as shown in a Table shown below.

**Table**

| **Barcode** | **Decoded Raw Alphanumeric English Text** | **Processed Bilingual Text** |
|---|---|---|
| Bilingual 1 | Hello \|71070475 | Hello 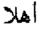 |
| Bilingual 2 | \|768705 75040407 750485810506 750485811005 \|Barcode | 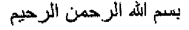 Barcode |

The first bilingual text to be retrieved from the matrix code symbol is represented in first row and third column of the above Table, and the second bilingual text to be retrieved from the matrix code symbol is represented in second row and third column of the Table. The first bilingual text and the second bilingual text are retrieved by decoding the matrix code symbol. In order to decode the matrix code symbol, one or more encoded values from the matrix code symbol are retrieved. The one or more encoded values associated with the first bilingual text is represented in first row and second column of the Table, and the one or more encoded values associated with the second bilingual text is represented in the second row and second column of the Table. However, it may be noted that English characters in both bilingual texts included in the Table are not represented in terms of their encoded values for convenience of representation and understanding. The one or more encoded values include one or more modified encoded values as shown in the Table. The one or more modified encoded values present in the first bilingual text and the second bilingual text correspond to Arabic characters.

After retrieving the one or more modified encoded values, each modified encoded value is mapped with a corresponding predefined encoded value. A modified encoded value associated with an Arabic character is shorter in length than a corresponding predefined encoded value. For example, a modified encoded value "71" associated with an Arabic character in the first row and second column in the Table is shorter in length than a corresponding predefined encoded value "1571" associated with an Arabic character, The one or more modified encoded values are identified in response to detecting one or more transitioning code values from the one or more encoded values. A transitioning code value of the one or more transitioning code values is used to identify the one or modified encoded values are associated with Arabic language. In other words, the transitioning code value indicates that the encoded values succeeding and preceding the transitioning code value are associated with different languages such as, English and Arabic.

In the Table, the transitioning code value corresponds to an encoded value associated with a transitioning character "¦". The transitioning code value of the transitioning character "¦" is 124 (not shown in the Table). As shown in the Table, first row and second column associated with the first bilingual text includes one instance of the transitioning code value. Whereas, the second row and second column associated with the second bilingual text includes two instances of the transitioning code value.

After identifying the one or more modified encoded values, each modified encoded value is mapped to the corresponding predefined encoded value. In an embodiment, the mapping may be performed by determining the corresponding predefined encoded value associated with each modified encoded value using a predefined encoding table. For example, modified encoded value "71" present in first row and second column is looked up in the predefined encoding table to determine the corresponding encoded value. As explained earlier, it is determined that the corresponding predefined encoded value associated with the modified encode value "71" is "1571". In the same manner, each modified encoded value associated with the first bilingual text and second bilingual text is looked up in the predefined encoding table to retrieve the corresponding predefined encoded value.

In another embodiment, one or more digits may be added to each of the one or more modified encoded values in order to obtain the corresponding predefined encoded value. The one or more digits to be added to each modified encoded values may be predefined. For example, digits "15" are added if the one or more modified encoded values are within the range "63 to 94". Thus, "15" is added to the modified encoded value "71" to obtain "1571". In the same manner, digits "16" are added, if the one or more modified encoded values are within the range "00 to 18".

Thereafter, decoder 308 decodes corresponding predefined encoded value to determine a corresponding character. The corresponding character is determined using the predefined encoded table. After decoding each of the corresponding predefined encoded value, decoder 308 obtains the first bilingual text and the second bilingual text in the original format. The first bilingual text and the second bilingual text obtained by decoder 308, after decoding each of the corresponding predefined encoded value are shown in first row and third column, and second row and third column of the Table, respectively.

A user of an apparatus such as, apparatus 300 may view the image of the matrix code symbol and may opt to decode the matrix code symbol. Thus, a user interface of the apparatus enables the user to view the matrix code symbol and text decoded from the matrix code symbol. FIG. 4 illustrates a user interface 400 for decoding a matrix code symbol in accordance with an exemplary embodiment. User interface 400 may be provided on the apparatus. As illustrated, user interface 400 shows an image 402 of the matrix code symbol. Image 402 may be retrieved from a memory of the apparatus. For example, image 402 may be retrieved from an image gallery stored in a mobile device. Image 402 may retrieved by the user by activating a gallery option 404 provided in user interface 400. Alternatively, an image capturing unit or a camera of the apparatus may be used to capture image 402 corresponding to the matrix code symbol. The image capturing unit may be activated by the user by selecting a camera 406 option. Image 402 thus obtained may be processed prior to decoding the matrix code symbol. The image obtained may be a skewed image or a blur image of the matrix code symbol. So the image may be processed to accommodate these errors prior to decoding the matrix code symbol. For example, a reference "L" shape 408 in image 402 may be misaligned or may not be vertically oriented. "L" shape 408 refers to the combination of bottom last line of black cells and extreme left line of black cells in image 402. This misalignment may occur while capturing image 402 due to any misalignment of an image capturing unit. In order to accommodate the misalignment, an image processor of apparatus such as, apparatus 300 may follow a line starting from a top corner to the bottom corner of the matrix code symbol. Thus, image processor may detect "L" shape 408 and accommodate for any misalignment of image 402. The method of processing the image is explained in detail in conjunction with FIG. 3.

To decode the matrix code symbol, user interface 400 provides a decode 410 option to the user. Thus, when decode 410 option is activated by the user, the matrix code symbol is decoded and corresponding text including the characters are displayed to the user in a notification area 412 as illustrated in FIG. 4. Alternatively, the apparatus may automatically decode the matrix code symbol in response to capturing the image of the matrix code symbol. In this case, the user may not activate decode 410 option. The method of decoding the matrix code symbol is explained in detail in conjunction with FIG. 3. User interface 400 also includes an about 414 option that when activated by the user, information associated with an application used for decoding the matrix code symbol is displayed in notification area 412.

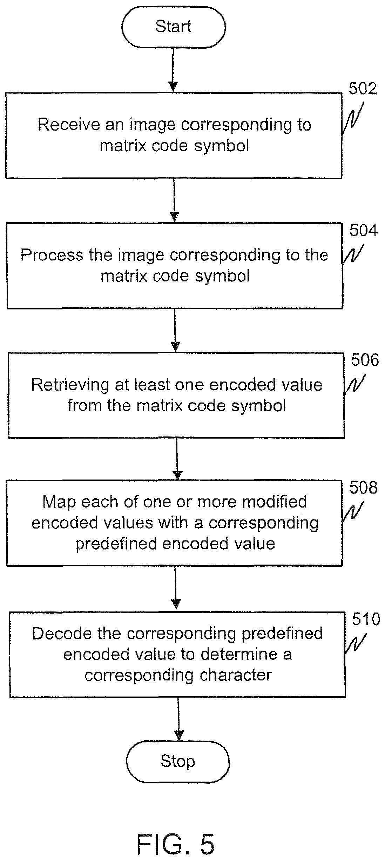

FIG. 5 illustrates a flowchart of a method of decoding a matrix code symbol in accordance with an embodiment. The matrix code symbol may be provided as an image. The matrix code symbol includes a plurality of encoded values. An encoded value of the plurality of encoded values corresponds to a character. The character is associated with a language. In an embodiment, the language may be one of Arabic and English. At step 502, the image corresponding to the matrix code symbol is received. The image of the matrix code symbol may be captured using an image capturing unit of an apparatus such as, apparatus 300. The image capturing unit may be a camera of a mobile device. Alternatively, the image of the matrix code symbol may be obtained from an image gallery stored in a memory of the apparatus. Thereafter, at step 504, the image is processed. In an embodiment, the image is processed to accommodate for various errors in the image such as, misalignment, blurriness, shadows, varying sizes of black and white cells in the matrix code symbol, trapezoid issues. This is explained in detail in conjunction with FIG. 3 and FIG. 4. Once the image is processed, the image is ready for decoding.

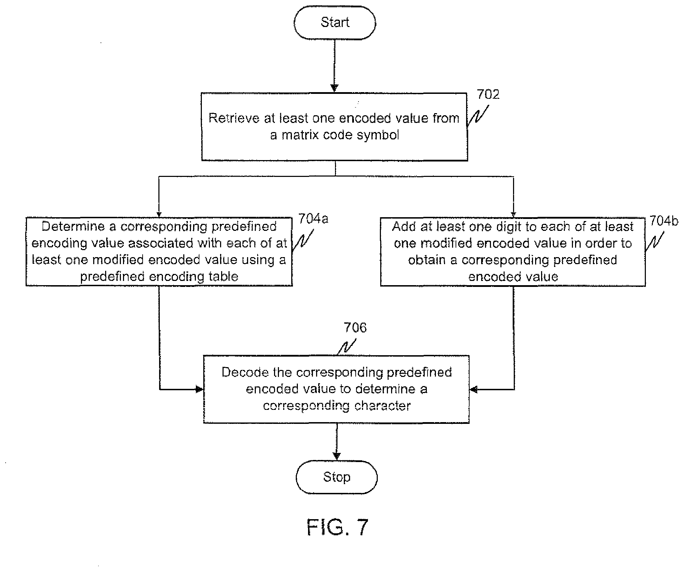

The image of the matrix code symbol is then decoded. During decoding, one or more encoded values are retrieved in response to the processing the image at step 506. The one or more encoded values include one or more modified encoded values. Thereafter, each modified encoded value of the one or more modified encoded values is mapped with a corresponding predefined encoded value at step 508. In this case, a modified encoded value includes two or more digits of a corresponding predefined encoded value. The predefined encoded value may be present in a predefined encoding table. This is explained in detail in conjunction with FIG. 7. Subsequently, the corresponding predefined encoded values are decoded to determine a corresponding character at step 510.

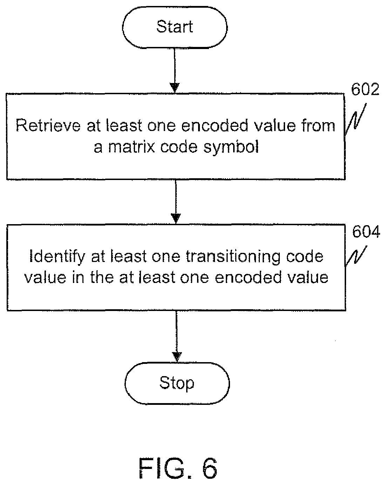

FIG. 6 illustrates a flowchart of a computer-implemented method of identifying one or more transitioning code values in the one or more encoded values in accordance with an embodiment of the invention. At step 602, the one or more encoded values are retrieved from the matrix code symbol. The one or more encoded values may be retrieved using one or more of a data matrix reader, a scanner, and a laser. Thereafter, at step 604, one or more transitioning code values are identified in the one or more encoded values. A transitioning code value of the one or more transitioning code values corresponds to an encoded value associated with a transitioning character. Examples of the transitioning character may include, but is not limited to "¦", "*", "^", and "&". In an embodiment, a transitioning code value may correspond to ASCII value "124" associated with transitioning character "¦". The transitioning code value "124" may be used to identify a language associated with a corresponding character of the one or more encoded values.

Based on the one or more identified transitioning code values, the one or more modified encoded values are identified in the one or more encoded values. Thus, the one or more transitioning code values indicate occurrences of the one or more modified encoded values. For example, if a string of encoded values include one or more predefined encoded values, and one or more modified encoded values, the one or more transitioning code values are used to indicate occurrences of the one or more modified encoded values in the string. This is explained in conjunction with FIG. 3.

FIG. 7 illustrates a flowchart of a computer-implemented method of obtaining a corresponding predefined encoded value associated with each modified encoded value of the one or more modified encoded values in accordance with an embodiment. At step 702, one or more encoded values are retrieved from a matrix code symbol. The one or more encoded values include one or more modified encoded values. The one or more modified encoded values are identified in the one or more encoded values using one or more transitioning code values. This is explained in conjunction with FIG. 6. After retrieving the one or more encoded values, at step 704a, a corresponding predefined encoded value associated with each of the one or more modified encoded values is determined. The corresponding predefined encoded value is determined using a predefined encoding table. Example of the predefined encoding table may include, but is not limited to an ASCII table, and a Unicode table. This is explained in detail in conjunction with FIG. 3. Alternatively, the mapping may be performed by adding one or more digits to each modified encoded value of the one or more modified encoded values in order to obtain the corresponding predefined encoded value at step 704b. This is explained in detail in conjunction with FIG. 3. Thereafter, at step 706, the corresponding predefined encoded value is decoded to determine a corresponding character.

The corresponding character is determined using the predefined encoded table. After decoding each of the corresponding predefined encoded value, the text present in the matrix code symbol is obtained in its original format. The text obtained may be a bilingual text or a multilingual text. Alternatively, the text obtained may be associated with a single language for example, Arabic.

Various embodiments of the apparatus method described herein facilitate in decoding a text from a matrix code symbol. The text obtained may be a bilingual text or a multilingual text. Alternatively, the text obtained may be associated with a single language for example, Arabic or English. The method includes retrieving one or more modified encoded values while decoding a matrix code symbol. A modified encoded value is shorter in length than a corresponding predefined encoded value. For example, a modified encoded value of an Arabic character is shorter in length by two digits as compared to its predefined encoded value. This facilitates in increasing capacity of the matrix code symbol in storing text. Further, an apparatus such as, a mobile device is used to capture an image of the matrix code symbol to conveniently decode the text from the matrix code symbol.

Those skilled in the art will realize that the above recognized advantages and other advantages described herein are merely exemplary and are not meant to be a complete rendering of all of the advantages of the various embodiments of the present invention.

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as critical, required, or essential features or elements of any or all of the claims. The present invention is defined solely by the appended claims including any amendments made during the pendency of this application and all equivalents of those claims as issued.

## Claims

1. An apparatus (300) for decoding a matrix code symbol, the apparatus comprising:
an image processor (306), wherein the image processor (306) processes an image corresponding to the matrix code symbol (104); and
a decoder (308) configured to:
retrieve at least one encoded value from the matrix code symbol (104) in response to processing the image corresponding to the matrix code symbol (104), wherein the at least one encoded value comprises at least one modified encoded value;
identify at least one transitioning code value in the at least one encoded value,
map each of the at least one modified encoded value with a corresponding predefined encoded value, wherein a modified encoded value comprises at least two digits of a corresponding predefined encoded value based on a transitioning code value of the at least one transitioning code value;
determine the corresponding predefined encoded value associated with each of the at least one modified encoded value using a predefined encoding table;
add at least one digit to each of the at least one modified encoded value in order to obtain the corresponding predefined encoded value; and
decode the corresponding predefined encoded value to determine a corresponding character.

2. The apparatus (300) of claim 1, wherein the at least one modified encoded value is related to a language, wherein the language is one of Arabic and English.

3. The apparatus (300) of claim 1 or 2 further comprising an image capturing unit (302) configured to capture the image corresponding to the matrix code symbol.

4. The apparatus (300) of claim 3 further comprising a memory (304) coupled to at least one of the image capturing unit (302), the image processor (306) and the decoder (308), the memory (304) capable of storing at least a portion of the image corresponding to the matrix code symbol (104).

5. The apparatus (300) of claim 4, wherein the memory (304) is capable of storing the predefined encoding table.

6. The apparatus (300) of claim 1 or 5, wherein the predefined encoding table corresponds to one of a Unicode table and an ASCII table.

7. A method (500) of decoding a matrix code symbol (104), the method comprising:
receiving (502) an image corresponding to the matrix code symbol;
processing (504) the image corresponding to the matrix code symbol (104);
retrieving (506) at least one encoded value from the matrix code symbol (104) in response to processing (504) the image corresponding to the matrix code symbol (104), wherein the at least one encoded value comprises at least one modified encoded value;
identifying (604) at least one transitioning code value in the at least one encoded value;
mapping (508) each of the at least one modified encoded value with a corresponding predefined encoded value, wherein a modified encoded value comprises at least two digits of a corresponding predefined encoded value based on a transitioning code value of the at least one transitioning code value;
determining (704a) the corresponding predefined encoded value associated with each of the at least one modified encoded value using a predefined encoding table;
adding (704b) at least one digit to each of the at least one modified encoded value in order to obtain the corresponding predefined encoded value; and
decoding (510) the corresponding predefined encoded value to determine a corresponding character.

8. The method (500) of claim 7, wherein the at least one modified encoded value is related to a language, wherein the language is one of Arabic, and English.

9. The method (500) of claim 7, wherein receiving (502) the image corresponding to the matrix code symbol comprises capturing the image.

10. The method (500) of claims 7 to 9 further comprising storing at least a portion of the image corresponding to the matrix code symbol (104).

## Patentansprüche

1. Vorrichtung (300) zum Dekodieren eines Matrixcodesymbols, aufweisend:
einen Bildprozessor (306), wobei der Bildprozessor (306) ein Bild verarbeitet, das dem Matrixcodesymbol (104) entspricht; und
einen Decodierer (308), konfiguriert zum:
Abrufen von mindestens einem codierten Wert aus dem Matrixcodesymbol (104) in Reaktion auf das Verarbeiten des Bilds, das dem Matrixcodesymbol (104) entspricht, wobei der mindestens eine codierte Wert mindestens einen modifizierten codierten Wert aufweist;
Identifizieren von mindestens einem Übergangscodewert im mindestens einen codierten Wert,
Mappen von jedem des mindestens einen modifizierten codierten Werts mit einem entsprechenden vordefinierten codierten Wert, wobei ein modifizierter codierter Wert mindestens zwei Ziffern eines entsprechenden vordefinierten codierten Werts basierend auf einem Übergangscodewert des mindestens einen Übergangscodewerts aufweist;
Bestimmen des entsprechenden vordefinierten codierten Werts, der mit jedem des mindestens einen modifizierten codierten Werts assoziiert ist, unter Benutzung einer vordefinierten Codiertabelle;
Hinzufügen von mindestens einer Ziffer zu jedem des mindestens einen modifizierten codierten Werts, um den entsprechenden vordefinierten codierten Wert zu erhalten; und
Dekodieren des entsprechenden vordefinierten codierten Werts zum Bestimmen eines entsprechenden Zeichens.

2. Vorrichtung (300) nach Anspruch 1, wobei der mindestens eine modifizierte codierte Wert auf eine Sprache bezogen ist, wobei die Sprache eine von Arabisch und Englisch ist.

3. Vorrichtung (300) nach einem der Ansprüche 1 oder 2, ferner aufweisend eine Bilderfassungseinheit (302), die zum Erfassen des Bilds, welches dem Matrixcodesymbol entspricht, konfiguriert ist.

4. Vorrichtung (300) nach Anspruch 3, ferner aufweisend einen Speicher (304), der an mindestens eines der Bilderfassungseinheit (302), des Bildprozessors (306) und des Decodierers (308) gekoppelt ist, wobei der Speicher (304) zum Speichern von mindestens einem Abschnitts des Bilds, das dem Matrixcodesymbol (104) entspricht, imstande ist.

5. Vorrichtung (300) nach Anspruch 4, wobei der Speicher (304) zum Speichern der vordefinierten Codiertabelle imstande ist.

6. Vorrichtung (300) nach einem der Ansprüche 1 oder 5, wobei die vordefinierte Codiertabelle einer einer Unicode-Tabelle und einer ASCII-Tabelle entspricht.

7. Verfahren (500) zum Dekodieren eines Matrixcodesymbols (104), das Verfahren aufweisend:
Empfangen (502) eines Bilds, das dem Matrixcodesymbol entspricht;
Verarbeiten (504) des Bilds, das dem Matrixcodesymbol (104) entspricht;
Abrufen (506) von mindestens einem codierten Wert aus dem Matrixcodesymbol (104) in Reaktion auf das Verarbeiten (504) des Bilds, das dem Matrixcodesymbol (104) entspricht, wobei der mindestens eine codierte Wert mindestens einen modifizierten codierten Wert aufweist;
Identifizieren (604) von mindestens einem Übergangscodewert im mindestens einen codierten Wert,
Mappen (508) von jedem des mindestens einen modifizierten codierten Werts mit einem entsprechenden vordefinierten codierten Wert, wobei ein modifizierter codierter Wert mindestens zwei Ziffern eines entsprechenden vordefinierten codierten Werts basierend auf einem Übergangscodewert des mindestens einen Übergangscodewerts aufweist;
Bestimmen (704a) des entsprechenden vordefinierten codierten Werts, der mit jedem des mindestens einen modifizierten codierten Werts assoziiert ist, unter Benutzung einer vordefinierten Codiertabelle;
Hinzufügen (704b) von mindestens einer Ziffer zu jedem des mindestens einen modifizierten codierten Werts, um den entsprechenden vordefinierten codierten Wert zu erhalten; und
Dekodieren (510) des entsprechenden vordefinierten codierten Werts zum Bestimmen eines entsprechenden Zeichens.

8. Verfahren (500) nach Anspruch 7, wobei der mindestens eine modifizierte codierte Wert auf eine Sprache bezogen ist, wobei die Sprache eine von Arabisch und Englisch ist.

9. Verfahren (500) nach Anspruch 7, wobei das Empfangen (502) des Bilds, welches dem Matrixcodesymbol entspricht, das Erfassen des Bilds aufweist.

10. Verfahren (500) nach einem der Ansprüche 7 bis 9, ferner aufweisend das Speichern von mindestens einem Abschnitts des Bilds, das dem Matrixcodesymbol (104) entspricht.

## Revendications

1. Appareil (300) pour décoder un symbole de code matriciel, cet appareil comprenant :
un processeur d'image (306), ce processeur d'image (306) traitant une image correspondant au symbole de code matriciel (104) ; et
un décodeur (308) configuré de façon à :
récupérer au moins une valeur codée du symbole de code matriciel (104) en réponse au traitement de l'image correspondant au symbole de code matriciel (104), cette au moins une valeur codée comprenant au moins une valeur codée modifiée ;
identifier au moins une valeur de code de transition dans l'au moins une valeur codée,
établir une correspondance entre l'au moins une valeur codée modifiée et une valeur codée prédéfinie correspondante, une valeur codée modifiée comprenant au moins deux caractères numériques d'une valeur codée prédéfinie correspondante basée sur une valeur de code de transition de l'au moins une valeur de code de transition ;
déterminer la valeur codée prédéfinie correspondante associée à chacune de l'au moins une valeur codée modifiée en utilisant une table de codage prédéfinie ;
ajouter au moins un caractère numérique à chacune de l'au moins une valeur codée modifiée de façon à obtenir la valeur codée prédéfinie correspondante ; et à
décoder la valeur codée prédéfinie correspondante pour déterminer un caractère correspondant.

2. Appareil (300) selon la revendication 1, dans lequel l'au moins une valeur codée modifiée est liée à une langue, cette langue étant soit l'arabe, soit l'anglais.

3. Appareil (300) selon la revendication 1 ou 2, comprenant en outre une unité de capture d'image (302) configurée de façon à capturer l'image correspondant au symbole de code matriciel.

4. Appareil (300) selon la revendication 3, comprenant en outre une mémoire (304) couplée au moins soit à l'unité de capture d'image (302), soit au processeur d'image (306), soit au décodeur (308), cette mémoire (304) étant capable de stocker au moins une partie de l'image correspondant au symbole de code matriciel (104).

5. Appareil (300) selon la revendication 4, dans lequel la mémoire (304) est capable de stocker la table de codage prédéfinie.

6. Appareil (300) selon la revendication 1 ou 5, dans lequel la table de codage prédéfinie correspond à soit une table Unicode, soit une table ASCII.

7. Procédé (500) de décodage d'un symbole de code matriciel (104), ce procédé comprenant :
la réception (502) d'une image correspondant au symbole de code matriciel ;
le traitement (504) de l'image correspondant au symbole de code matriciel (104) ;
la récupération (506) d'au moins une valeur codée du symbole de code matriciel (104) en réponse au traitement (504) de l'image correspondant au symbole de code matriciel (104), cette au moins une valeur codée comprenant au moins une valeur codée modifiée ;
l'identification (604) d'au moins une valeur de code de transition dans l'au moins une valeur codée ;
l'établissement d'une correspondance (508) entre l'au moins une valeur codée modifiée et une valeur codée prédéfinie correspondante, une valeur codée modifiée comprenant au moins deux caractères numériques d'une valeur codée prédéfinie correspondante basée sur une valeur de code de transition de l'au moins une valeur de code de transition ;
la détermination (704a) de la valeur codée prédéfinie correspondante associée à chacune de l'au moins une valeur codée modifiée en utilisant une table de codage prédéfinie ;
l'addition (704b) d'au moins un caractère numérique à chacune de l'au moins une valeur codée modifiée de façon à obtenir la valeur codée prédéfinie correspondante ; et
le décodage (510) de la valeur codée prédéfinie correspondante pour déterminer un caractère correspondant.

8. Procédé (500) selon la revendication 7, dans lequel l'au moins une valeur codée modifiée est liée à une langue, cette langue étant soit l'arabe, soit l'anglais.

9. Procédé (500) selon la revendication 7, dans lequel la réception (502) de l'image correspondant au symbole de code matriciel comprend la capture de l'image.

10. Procédé (500) selon les revendications 7 à 9, comprenant en outre le stockage d'au moins une partie de l'image correspondant au symbole de code matriciel (104).
